Europäisches Patentamt

European Patent Office

Office européen des brevets

(11) Veröffentlichungsnummer: **0 199 949**
**A2**

# (12) EUROPÄISCHE PATENTANMELDUNG

(21) Anmeldenummer: 86103476.7

(22) Anmeldetag: 14.03.86

(51) Int. Cl.⁴: **B 60 T 17/00**

(30) Priorität: 30.04.85 DE 3515488

(43) Veröffentlichungstag der Anmeldung:
05.11.86 Patentblatt 86/45

(84) Benannte Vertragsstaaten:
AT BE CH DE FR GB IT LI NL SE

(71) Anmelder: KNORR-BREMSE AG
Moosacher Strasse 80 Postfach 401060
D-8000 München 40(DE)

(72) Erfinder: Schuhbeck, Christian
Schopfgraben 21
D-8160 Miesbach(DE)

(72) Erfinder: Unger, Hans
St. Benediktstrasse 7
D-8044 Unterschleissheim(DE)

(54) Ablassventil, insbesondere für Druckluftanlagen von Kraftfahrzeugen.

(57) Bei einem Ablaßventil (5), welches für Druckluftanlagen, insbesondere von Kraftfahrzeugen, verwendbar ist, wird im allgemeinen ein Ventilkörper (23) verwendet, welcher unter der Kraft einer Feder (29) gegenüber einem Ventilsitz wirkt; der Ventilkörper wird bei Erreichen eines vorherbestimmbaren Druckes von seinem Ventilsitz (27) abgehoben, so daß Druckluft vom Drucklufterzeuger in die Außenluft abgeblasen werden kann, nachdem sie das Ablaßventil (5) passiert hat. Um die bei einem Öffnen des Ablaßventils (5) infolge der explosionsartigen Expansion der Druckluft auftretenden starken Geräusche zu reduzieren, ist dem Ventilkörper (23) ein Ventildämpfer (9) in Wirkverbindung zugeordnet. Der Ventildämpfer (9) ist von hydraulischer Wirkungsweise und arbeitet in Öffnungsrichtung des Ventilkörpers des Ablaßventils, derart, daß die Öffnungsbewegungen des Ventilkörpers (23) verzögert stattfinden und hierdurch eine Reduzierung der Expansionsgeräusche ermöglicht wird. Der Ventildämpfer (9) weist einen in einem mit Hydrauliköl gefüllten Gehäuse (11) verschieblich angeordneten Kolben (17) auf, welcher mittels einer mit ihm verbundenen Kolbenstange (15) auf den Ventilkörper (23) des Ablaßventils einwirkt, wobei die Verzögerung in den Ventilbewegungen durch den gedrosselten Volumenausgleich zwischen den beiden Seiten des Kolbens (17) ausgelöst wird.

./...

Knorr-Bremse AG          München, 29.04.85

Moosacher Straße 80         TP1-hn/ma

8000 München 40          unser Zeichen: 1847

                         Text.Nr.: 0102P

## Ablaßventil, insbesondere für Druckluftanlagen von Kraftfahrzeugen

Die Erfindung betrifft ein Ablaßventil nach dem Gattungsbegriff des Patentanspruches 1.

Ablaßventile der gattungsgemäßen Art sind vor allem in Druckreglern der Druckluftbremsanlagen von Kraftfahrzeugen vorgesehen, wobei sie im Bedarfsfalle mit einem zusätzlichen Schalldämpfer ausgestattet sein können. Auch bei Lufttrocknern, wie sie insbesondere in Nutzfahrzeugen benutzt werden, sind derartige Ablaßventile mit Schalldämpfer vorgesehen.

Bei der Entwicklung geräuscharmer Fahrzeuge werden auch an die Dämpfung der Ablaßgeräusche immer höhere Anforderungen gestellt; dies gilt insbesondere für Druckluftbremsanlagen von Nutzfahrzeugen. Der Verwendung herkömmlicher Schalldämpfer mit Prallwänden und Labyrinthführungen etc. sind insbesondere aus baulichen Gründen Grenzen gesetzt. Ein besonderes Problem ist hierbei die Dämpfung des Expansionsgeräusches, welches dadurch entsteht, daß die in den Geräten und Rohrleitungen von Druckluftbremsanlagen gespeicherte Druckluft explosionsartig in die Atmosphäre entweicht, wenn das Ablaßvertil öffnet.

Davon ausgehend besteht die Aufgabe der Erfindung darin, ein Ablaßventil der in Rede stehenden Art so auszubilden, daß beim Öffnen

desselben eine ausreicnende Geräuschdämpfung stattfindet; es soll insbesondere vermieden werden, daß Druckluft explosionsartig in die Atmosphäre entweicht.

Zur Lösung dieser Aufgabe dienen die Merkmale nach dem Kennzeicnnungsteil des Patentanspruches 1.

Vorteilnafte Ausgestaltungen und Weiterbildungen sind in weiteren Patentansprücnen aufgeführt.

Das Ablaßventil unterliegt durch die funktionelle Zuordnung des hyoraulisch wirkenden Ventildämpfers einer verzögerten Öffnungsbewegung, wodurch eine plötzliche und starke Geräusche auslösende Expansion vermieden werden kann. Die Verzögerungen in der Ventilbewegung des Ablaßventils können exakt vorherbestimmt werden, indem der zwischen Außenumfang des Kolbens und Innenwandung des den Kolben aufnehmenden Gehäuses bestenende Spalt kleiner oder größer dimensioniert wird. Auch ist es möglich, die Geschwindigkeit der Ventilöffnungsbewegung dadurch zu verändern, daß Hydrauliköl unterschiedlicher Viskosität in dem den Kolben aufnehmenden Gehäuse verwendet wird.

Nach einer vorteilnaften Ausführungsform ist der Ventildämpfer in zentraler Zuordnung zum Ablaßventil innerhalb eines Geräuschdämpfers bzw. Schalldämpfers von an sich bekannter Konstruktion vorgesehen, so daß hinsichtlich ihrer Expansion bereits gedämpfte Druckluft nach Passieren des Schalldämpfers und entsprechender weiterer Geräuschreduzierung in die Außenluft abgelassen wird. Im Rahmen des der Erfindung eigenen allgemeinen Gedankens ist es auch möglich, daß anstelle des Membranrückschlagventils ein Rückschlagventil anderer Konstruktion, gegenüber den Bohrungen oder Durchlässen im Kolben wirkend, vorgesehen ist. Das hydraulisch gedämpfte Ablaßventil eignet sich prinzipiell für jede Art der Verwendung, im Nutzfahrzeugbau ist es vorzugsweise bei allen der Druckluftbremsanlage zugeordneten Geräten verwendbar, bei welchen ein Ablassen der Druckluft erforderlich wird, so bei Druckreglern, Lufttrocknern und dgl.

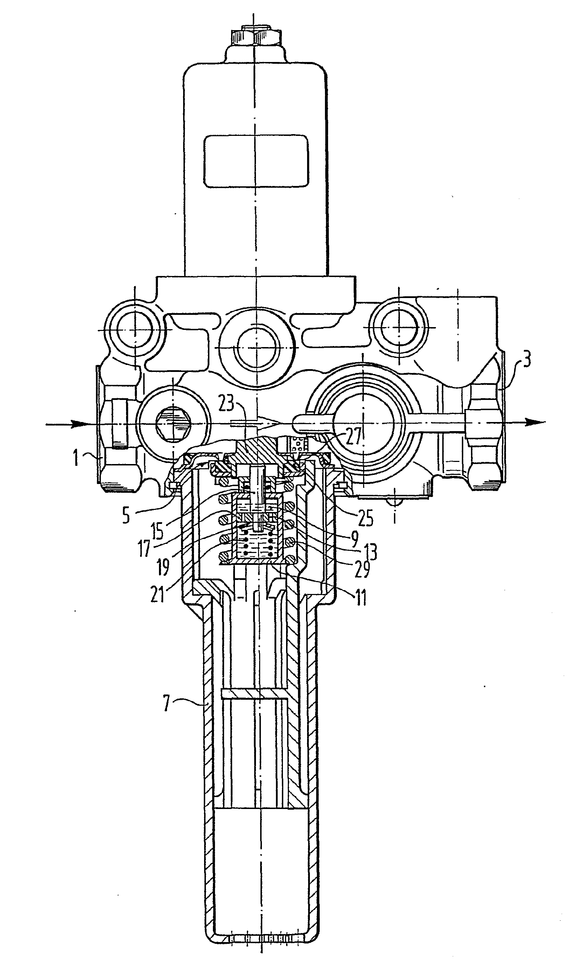

Die Erfindung ist nachfolgend anhand eines Ausführungsbeispiels unter Bezugnahme auf die beigefügte Zeichnung erläutert. Die Zeichnung zeigt in Teilschnittansicht ein mit einem Ventildämpfer ausgestattetes Ablaßventil bei Verwendung an einem Druckregler, wie er z.B. in Nutzfahrzeugen Verwendung findet.

Der in der Zeichnung dargestellte Druckregler weist einen Drucklufteinlaß 1 und einen Druckluftauslaß 3 auf; an der Unterseite des im Druckregler befindlichen, an sich bekannten (nicht dargestellten) Ventilmechanismus befindet sich ein Ablaßventil 5, mittels welchem bei Erreichen eines vorbestimmten Druckwertes Druckluft abgelassen wird. Vorzugsweise passiert die Druckluft hierbei einen Schalldämpfer 7. Gemäß der Erfindung ist dem Ablaßventil 5 ein Ventildämpfer 9 zugeordnet. Der Ventildämpfer 9 besitzt die Aufgabe, die Ventilbewegungen des Ablaßventils 5 in vorherbestimmbarer Weise zu verzögern bzw. in ihrem zeitlichen Ablauf zu steuern, derart, daß hierdurch eine Dämpfung des Expansionsgeräusches beim Tätigwerden des Ablaßventils erreicht wird. Der Ventildämpfer 9 weist ein ortsfest im Schalldämpfer 7 gehaltenes Gehäuse 11 auf, welches nahezu vollständig mit Hydrauliköl gefüllt ist. Im Gehäuse ist ein von Bohrungen 13 durchsetzter, mit einer Kolbenstange 15 verbundener Kolben 17 geführt. Der Kolben 17 ist an seinem Außenumfang dichtungslos gegenüber der Innenwandung des Gehäuses gehalten und trägt an seiner gemäß Darstellung unteren Seite ein Membranrückschlagventil 19, welches bei Abwärtsbewegung des Kolbens 17 gegenüber den Bohrungen 13 zu dichten vermag. An der Unterseite des Kolbens 17 stützt sich eine Feder 21 ab, welche in nachfolgend beschriebener Weise den Kolben 17 nach oben gerichtet zu bewegen vermag. Gemäß Ausführungsbeispiel ist die Feder 21 an einem mit dem Kolben 17 verbundenen Ring abgestützt, welcher gleichzeitig als Anschlag bzw. Führungsteil für die Membrane des Membranrückschlagventils (19) dient.

Die mit dem Kolben 17 verbundene Kolbenstange 5 erstreckt sich unter Abdichtung aus dem Gehäuse 11 nach oben gerichtet und liegt in der Position gemäß Darstellung an der Unterseite des Ventilkörpers 23 des Ablaßventils 5 ab.

Der Ventilkörper 23 trägt in an sich bekannter Weise an seinem Außenumfang einen Dichtungsring 25, welcher gegenüber einem am Druckregler ortsfest gehaltenen Ventilsitz 27 zur Wirkung gelangt, derart, daß bei Abwärtsbewegung des Ventilkörpers 23 der Dichtungsring 25 vom Ventilsitz 27 abhebt und hierdurch das Ablaßventil 5 geöffnet ist. Auf den Ventilkörper 23 wirken die im Inneren des Druckreglers befindlichen (nicht dargestellten) Druckregel-Ventilelemente ein. An der Unterseite des Ventilkörpers, im dargestellten Ausführungsbeispiel an der Unterseite eines den Dichtungsring gegen den Ventilkörper drückenden Halteringes, liegt ein Ende einer Feder 29 an, deren entgegengesetztes Ende sich an einem ortsfesten Auflager im Schalldämpfer 7 abstützt. Die Feder 29 wirkt der Abwärtsbewegung des Ventilkörpers 23 entgegen und drückt diesen mit seinem Dichtungsring in dichtende Anlage an den Ventilsitz 27 an, wenn ein erwünschter, vorherbestimmbarer Druckabbau durch das Ablaßventil 5 hindurch vollzogen ist.

Die Wirkungweise der vorstehend beschriebenen Dämpfungseinrichtung ist wie folgt :

Beim Öffnen des Ablaßventils 5 drückt dieses mittels des Ventilkörpers 23 auf die Kolbenstange 15 des Ventildämpfers 9. Bei der dadurch verursachten Abwärtsbewegung des mit der Kolbenstange 15 verbundenen Kolbens 17 schließt das Membranrückschlagventil 19 und das unter dem Kolben 17 befindliche Hydrauliköl wird durch den Spalt zwischen Kolben und zylindrischer Wand des Gehäuses 11 auf die Oberseite des Kolbens verdrängt. Durch eine entsprechende Dimensionierung dieses Spaltes und abhängig von der Viskosität des Öls kann der vorgenannte Bewegungsvorgang beim Öffnen des Ablaßventils 5 in erwünschtem Maße schwergängig gemacht werden. Es kann also die Öffnungsgeschwindigkeit des Ablaßventils und der damit verbundene Expansionsvorgang in erwünschter, beinahe beliebiger Weise verzögert werden. Durch diese Verzögerung der Öffnungsbewegung des Ablaßventils wird eine explosionsartige, starke Geräusche verursachende Expansion vermieden.

Beim Schließen des Ablaßventils 5 wird der Kolben 17 im Gehäuse 11 durch die relativ schwach dimensionierte Feder 21 nach oben verschoben, da die Kolbenstange 15 dem Ventilkörper 23 nachfahren kann. Die nach oben gerichtete Bewegung vollzieht der Kolben 17 fast ungehemmt, weil das Hydrauliköl in umgekehrter Richtung, d.h. gemäß Darstellung abwärts gerichtet, fast ungedrosselt durch die Bohrungen 13 und entlang des Außenumfangs an die Kolbenunterseite gelangt.

Der Schalldämpfer 7 ist in vorteilhafter Weise mit einem Schalldämpfer 7 der dargestellten Bauart oder vergleichbarer Konstruktion kombinierbar. Der Schalldämpfer besorgt hierbei die Geräuschdämpfung der nach dem Expansionsvorgang bei geöffnetem Ablaßventil vom Kompressor weiterhin geförderten Druckluft.

0199949

Knorr-Bremse ~~GmbH~~ **AG**
Moosacher Straße 80
8000 München 40

München, 29.04.85
TP1-hn/ma
unser Zeichen: 1847
Text.Nr.: 0102P

Bezugszeichenliste

| 1  | = | Drucklufteinlaß          |
|----|---|--------------------------|
| 3  | = | Druckluftauslaß          |
| 5  | = | Ablaßventil              |
| 7  | = | Schalldämpfer            |
| 9  | = | Ventildämpfer            |
| 11 | = | Gehäuse                  |
| 13 | = | Bohrung                  |
| 15 | = | Kolbenstange             |
| 17 | = | Kolben                   |
| 19 | = | Membranrückschlagventil  |
| 21 | = | Feder                    |
| 23 | = | Ventilkörper             |
| 25 | = | Dichtungsring            |
| 27 | = | Ventilsitz               |
| 29 | = | Feder                    |

Knorr-Bremse ~~GmbH~~ A G     — 1 —     München, 29.04.85

Moosacher Straße 80     TPl-hn/ma ~~100139~~

8000 München 40     unser Zeichen: 1847

Text.Nr.: 0102P

Patentansprüche

1) Ablaßventil, insbesondere für Druckluftanlagen von Kraftfahrzeugen, mit einem druckabhängig gegen die Kraft einer Federeinrichtung öffnenden Ventilkörper, gekennzeichnet durch einen gegenüber dem Ventilkörper (23) in Öffnungsrichtung desselben wirkenden hydraulischen Ventildämpfer (9).

2) Ablaßventil nach Anspruch 1, dadurch gekennzeichnet, daß der Ventildämpfer (9) einen in einem mit Hydrauliköl gefüllten, vorzugsweise zylindrischen Gehäuse (11) verschieblich geführten Kolben (17) aufweist, welcher mittels einer Kolbenstange (15) in Wirkverbindung mit dem Ventilkörper (23) des Ablaßventils ist.

3) Ablaßventil nach Anspruch 2, dadurch gekennzeichnet, daß der Kolben (17) an seinem Außenumfang dichtungslos gegenüber der Gehäusewandung geführt ist, derart, daß bei Bewegung des Kolbens im Gehäuse (11) Hydrauliköl in begrenzter Menge den Außenumfang des Kolbens zu passieren vermag, daß der Kolben (17) fernerhin in Axialrichtung mit die beiden Kolbenseiten verbindenden Bohrungen (13) versehen ist, daß an der der Kolbenstange (15) abgewandten Kolbenseite ein Membranrückschlagventil (19) gegenüber den Bohrungen wirkend angeordnet ist, derart, daß die Bohrungen bei Bewegung des Kolbens in Richtung des Ventilkörpers (23) vom Membranrückschlagventil (19) gegeben werden, und daß auf die das Membranrückschlagventil tragende Kolbenseite eine den Kolben (17) in Richtung des Ventilkörpers (23) drückende Feder (21) einwirkt.

0199949

4) Ablaßventil nach einem der vorangehenden Ansprüche, dadurch gekennzeichnet, daß das den Kolben (17) aufnehmende Gehäuse (11) in zentraler, ortsfester Position an der Außenseite des Ablaßventils (5) gehaltert ist, wobei die kolbenstange (15) in geschlossener Lage des Ablaßventils am Ventilkörper (23) desselben anliegt.

5) Ablaßventil nach einem der vorangehenden Ansprüche, dadurch gekennzeichnet, daß der Ventildämpfer (9) innerhalb eines an das Ablaßventil (5) angesetzten Schalldämpfers (7) mittig angeordnet ist, derart, daß die das Ablaßventil (5) verlassende Druckluft den Schalldämpfer in Richtung der Außenluft passiert.

6) Ablaßventil nach einem der vorangehenden Ansprüche, dadurch gekennzeichnet, daß das Gehäuse nur teilweise mit Hydrauliköl gefüllt ist.

2 00 134/1847

0199949